# EUROPÄISCHE PATENTSCHRIFT

(11) **EP 1 171 891 B1**
(45) Veröffentlichungstag und Bekanntmachung des Hinweises auf die Patenterteilung: **29.03.2006**
(21) Anmeldenummer: 00936613.9
(22) Anmeldetag: 12.04.2000
(51) Int. Cl.: H01B 7/36, H01B 13/00

(54) **KABEL ZUR MANUELLEN VERDRAHTUNG VON ELEKTRISCHEN GERÄTEN EINER KOMPLEXEN, INDIVIDUELLEN ANLAGE UND VERFAHREN ZU DEREN ERSTELLUNG**
CABLES FOR MANUALLY WIRING THE ELECTRICAL DEVICES OF A COMPLEX, INDIVIDUAL INSTALLATION AND METHOD FOR PRODUCING THE CABLE
CABLES POUR LE CABLAGE D'APPAREILS ELECTRIQUES D'UNE INSTALLATION INDIVIDUELLE COMPLEXE, ET LEUR PROCEDE DE REALISATION

(30) Priorität: 22.04.1999 DE 19918212
(43) Veröffentlichungstag der Anmeldung: 16.01.2002
(73) Patentinhaber: CadCabel AG, 37318 Hohengandern (DE)
(72) Erfinder: HANZEL, Peter, D-34359 Reinhardshagen (DE)
(74) Vertreter: Walther, Robert
(86) Internationale Anmeldenummer: PCT/DE2000/001131
(87) Internationale Veröffentlichungsnummer: WO 2000/065610

(56) Entgegenhaltungen:
- EP-A- 0 038 861
- DE-A- 4 413 577
- US-A- 4 126 936

## Beschreibung

Die vorliegende Erfindung betrifft einzelne Kabel zur manuellen Verdrahtung von elektrischen Geräten einer komplexen, individuellen Anlage, wobei jedes einzelne Kabel gemäß der für die Verdrahtung erforderlichen Art, Länge, Querschnitt und/oder Farbe konfektioniert ist, insbesondere wobei jedes einzelne Kabel mit einem Verwendungshinweis versehen ist, und wobei die unterschiedlichen, zur Verdrahtung eines speziellen Gerätes oder eines speziellen Teilbereiches der komplexen, individuellen Anlage erforderlichen Kabel herstellerseitig zu einem leicht lösbaren Kabelbündel zusammengefasst sind, sowie ein Verfahren zu deren Erstellung.

Bei der Herstellung von großen Anlagen, wie beispielsweise Gebäuden, Kraftwerken, Sondermaschinen, Klärwerken oder dergleichen, muss eine Vielzahl von Geräten fachgerecht miteinander verdrahtet werden, um eine zuverlässige Bedienung, Überwachung und/oder Steuerung der Anlage zu ermöglichen. Hierzu werden in einem oder mehreren Schaltschränken entsprechende Geräte installiert, die miteinander elektrisch zu verbinden sind. Entsprechend einem Stromlaufplan und eines Schaltschranklayouts werden individuell konfektionierte Kabel oder Kabelbäume an entsprechende Klemmen der Geräte montiert. Je nach Einsatzzweck wird die Art des Kabels entsprechend den Anforderungen ausgewählt. Dies kann beispielsweise ein Kupfer- oder ein Glasfaserkabel, ein leicht oder ein stark isoliertes Kabel, ein ein- oder mehrlitziges Kabel sein. Der Querschnitt des Kabels wird entsprechend der zu erwartenden Stromstärke dimensioniert. Um keine überflüssigen Kabel im Schaltschrank zu haben, wird die Länge des jeweiligen Kabels aus dem Schaltschrank-Layout und der Verdrahtungsliste bestimmt und das Kabel entsprechend abgelängt. Auch der gezielte Einsatz von Farben wird nach den Steuer- und Regelungstechnischen Gesetzmäßigkeiten vorgenommen und erhöht die Übersichtlichkeit im Schaltschrank.

Es versteht sich, dass mit Kabel nicht nur einzelne Kabel gemeint sind, sondern dass hierunter auch entsprechend konfektionierte Kabelbäume zu verstehen sind, denn je nach Einsatzzweck können wahlweise einzelne Kabel und/oder vorbereitete Kabelbäume an einem Gerät angeschlossen werden, um die entsprechende Klemme dieses Gerätes mit den jeweiligen Klemmen anderer Geräte zu verbinden.

Aus der DE 197 16 864 A1 ist eine Vorrichtung zum Bündeln von Kabeln, Schläuchen oder Seilen bekannt, an der zusätzlich ein Element zur Befestigung des Bündels an einem anderen Gegenstand vorgesehen ist. Mit diesem Element kann das zusammengehaltene Bündel zu Transportzwecken an diesem anderen Gegenstand befestigt werden.

Aus der DE 197 09 058 A1 ist ein Verfahren zum automatischen Konfektionieren von flexiblen Adern für eine elektrische Anlage bekannt, bei dem die flexiblen Adern an ihren Enden mit Kontaktelementen versehen werden, wobei jedes Kontaktelement zwei oder mehr Adern aufnehmen kann und mit entsprechend vielen Sollbruchstellen versehen ist. Hierdurch kann ein Band mit vielen aneinanderhängenden und mit Kontaktelementen versehenen Adern erstellt werden, wobei die einzelnen Adern durch einfaches Abbrechen von diesem Band entfernt werden können.

Aus der EP 038 861 A1 ist es bekannt, dass die unterschiedlichen, zur Verdrahtung eines speziellen Gerätes oder eines speziellen Teilbereiches der komplexen, individuellen Anlage erforderlichen Kabel herstellerseitig zu einem leicht lösbaren Kabelbündel zusammengefasst sind, und dass am Kabelbündel ein Bestimmungshinweis, insbesondere ein Etikett, mit Informationen über das zu verdrahtende Gerät angebracht ist. Somit kann der Monteur vor Ort nunmehr ein beliebiges Kabelbündel aus dem Transportbehälter herausgreifen, anhand des auf dem Kabel vorgesehenen Bestimmungshinweises dieses Kabelbündels gleich einem bestimmten Gerät zuordnen, und sich somit auf die Suche nach der richtigen Anschlussklemme auf das entsprechende Gerät beschränken, so dass die bisher übliche Suche des richtigen Anschlusses im gesamten Schaltschrank nun entfällt. Das bisher übliche lange Suchen nach der richtigen Anschlussklemme wird hierbei dahingehend deutlich vereinfacht, dass nunmehr sämtliche Kabel dieses Bündels in enger räumlicher Nähe an dem speziellen Gerät anzubringen sind. Dies vereinfacht die Suche nach der richtigen Anschlussklemme deutlich. Dennoch muss der Bediener auf seinen Schaltplan schauen, um zu sehen wo er die jeweiligen Kabel anschließt und wie viele Kabel an eine Klemme kommen.

Davon ausgehend liegt der vorliegenden Erfindung die Aufgabe zugrunde, Kabel zu schaffen, mit denen die manuelle Verdrahtung von elektrischen Geräten der Schalt-, Steuer- und Regelungstechnik in komplexen, individuellen Anlagen schnell und in einfacher Weise erfolgen kann.

Als erste technische Lösung dieser Aufgabe wird erfindungsgemäß vorgeschlagen, die eingangs genannte Vorrichtung dahingehend weiterzubilden, Verwendungshinweise und Informationen über die weitere Verdrahtungsrichtung und gegebenenfalls Informationen über weitere Kabel an derselben Klemme vorzusehen. Dies können insbesondere Pfeile und/oder Winkel sowie Sterne sein. Das heißt, dass nach dem Anklemmen des Kabels hierdurch eine Information zur Verfügung steht, ob das Kabel anschließend nach rechts, links, oben oder unten weitergeführt werden soll. Hierdurch entfällt bei der Montage dieses Kabels die Suche nach der entsprechenden Gegenklemme und der Monteur weiß dennoch, wie das Kabel im Schaltschrank zu verlegen ist. Durch diese zusätzlichen Informationen wird die Arbeit des Monteurs erleichtert und die Montage kostengünstiger. Umfasst der Verwendungshinweis ein Sternchen oder ein anderes Symbol, um den Anschluss eines zweiten Kabels an dieselbe Klemme anzuzeigen, so weiß der Monteur, dass er beispielsweise die Schraube der Klemme nicht abschließend festzuziehen braucht, da ein zweites Kabel zu erwarten ist. Auch hierdurch wird die Arbeit des Monteurs deutlich vereinfacht.

Auf dem an jedem Kabelbündel befindlichen Etikett können alle hilfreichen Hinweise betreffend das zu verdrahtende Gerät, insbesondere dessen Betriebsmittelkennzeichnung, aufgebracht sein. Es können aber auch weitergehende Montagehinweise, Anlage- und Ortskennzeichen vorgesehen sein.

Nachdem der Monteur die Kabel dieses Kabelbündels montiert hat, wird das nächste Kabelbündel ergriffen und in ähnlich einfacher Weise montiert.

In der Praxis hat es sich als vorteilhaft erwiesen, mehrere derartige Kabelbündel zu einem sogenannten Gruppenbündel zusammenzufassen, wobei im Gruppenbündel die Kabelbündel benachbarter Geräte zusammengefasst sind. Hierdurch kann der Monteur ganze Gerätegruppen schnell und einfach verdrahten.

In einer anderen, besonders bevorzugten Ausführungsform ist das Kabelbündel als Rundbündel ausgeführt, wobei die einzelnen Kabel durch ein flexibles Band zusammengehalten sind. Hierbei werden die zum Kabelbündel gehörenden Kabel wahllos zu einem zwischen 1 cm und 15 cm, vorzugsweise 3 cm bis 5 cm dicken Bündel zusammengeschoben und in kostengünstiger Weise mit einem flexiblen Kunststoffband zusammengehalten. Derartige Kabelbündel können einfach mit einer Hand ergriffen und beispielsweise zwischen Daumen und Zeigefinger gehalten werden, so dass einzelne Kabel zwecks Einführung in die Klemme zwischen Daumen und Zeigefinger gehalten werden können. Dies erleichtert dem Monteur die Montage. Dabei ist es vorteilhaft, das Band so stramm festzuziehen, dass keines der Kabel aus dem Kabelbündel herausgezogen werden kann. In einer alternativen Ausführungsform ist das Kabelbündel als Sequenzbündel ausgeführt, wobei die einzelnen Kabel in der einzuklemmenden Reihenfolge sortiert sind und in dieser Reihenfolge auf einem Streifenband gehalten sind. Dies hat den Vorteil, dass der Monteur lediglich die erste Klemme des ersten Kabels in diesem Gerät suchen muss, und anschließend weiß, dass die entsprechenden Klemmen der nachfolgenden Kabel in unmittelbarer räumlicher Nähe angeordnet sind, so dass ein Suchen der einzelnen Klemme innerhalb des Gerätes entfällt, was zu einer Montagezeitverkürzung führt.

Ein weiterer Vorteil besteht darin, dass weitere Sortierkriterien, beispielsweise unterschiedliche Anschlussebenen, Erreichbarkeit mit Schraubwerkzeugen usw. realisiert werden können.

Noch ein weiterer Vorteil des Sequenzbündels besteht darin, dass durch die Sortierung der Kabel dem Monteur die Reihenfolge der zu montierenden Kabel vorgegeben werden kann. An besonders dicken Knotenpunkten und/oder an Umlenkstellen können die etwaig auftretende Biegeradien hierdurch bei der Berechnung der Länge der Kabel berücksichtigt werden, was zu einer sehr viel präziseren und ordentlicheren Verdrahtung der einzelnen Geräte führt.

In noch einer alternativen Ausführungsform ist das Kabelbündel als kombiniertes Rund- und Sequenzbündel ausgeführt, wobei einige Kabel auf einem Streifenband gehalten sind und wobei dieses Streifenband mit anderen Kabeln und/oder Streifenbändern zu einem Rundbündel zusammengefasst und durch ein flexibles Band zusammengehalten ist. Hierdurch werden die oben genannten Vorteile des Rund- und des Sequenzbündels miteinander kombiniert.

Als zweite technische Lösung dieser Aufgabe wird erfindungsgemäß vorgeschlagen, das eingangs genannte Verfahren durch die folgenden Schritte weiterzubilden:
A. Erfassen eines Stromlaufplanes und/oder eines Schaltschrank-Layouts der zu verdrahtenden Anlage durch eine EDV-Anlage;
B. Auswahl eines speziellen, zu verdrahtenden Gerätes;
C. Ermitteln der Konfektionsdaten der Kabel dieses Gerätes durch die EDV-Anlage;
D. Übergabe dieser Daten an eine Konfektionsvorrichtung;
E. Konfektionieren und Kennzeichnen der Kabel durch die Konfektionsvorrichtung;
F. Bündeln der Kabel mit den folgenden Schritten:
   F.1.1. Auswahl eines ersten zu verdrahtenden Kabels;
   F.1.2. Aufbringen dieses Kabels auf ein Streifenband;
   F.1.3. Auswahl eines weiteren zu verdrahtenden Kabels, welches
   in der Nähe des vorangehenden Kabels zu verdrahten ist; F.1.4. Aufbringen dieses Kabels auf das Streifenband neben dem vorhergehenden Kabel;
   F.1.5. Wiederholen der Schritte F.1.3. bis F.1.4. so lange, bis alle Kabel auf dem Streifenband aufgebracht sind.

Die zu den Kabeln aufgeführten Vorteile der Erfindung gelten in analoger Weise auch für das Verfahren zur Herstellung des Kabelbündels, das heißt durch dieses Herstellungsverfahren können die Kabelbündel unter Zuhilfenahme von EDV Anlagen und Maschinen schnell und kostengünstig gefertigt werden.

In einer bevorzugten Ausführungsform des erfindungsgemäßen Verfahrens umfasst der Schritt B die folgenden Schritte:
B.1. Ermitteln der zwischen den einzelnen Geräten und Anschlüssen zu erstellenden Verbindungen gemäß dem Stromlaufplan und/oder dem Schaltschranklayout der zu verdrahtenden Anlage durch eine EDV-Anlage;
B.2. Zuordnen jeder Verbindung zu einem bestimmten Gerät;
B.3. Auswahl eines speziellen Gerätes.

Die Schritte B.1. und B.2. werden auch als Entflechten des Stromlaufplanes bezeichnet. Dabei wird jede Verbindung zwischen Anschlüssen zweier verschiedener Geräte genau einem Gerät per Definition zugeordnet. Dies hat den Vorteil, dass hiermit Doppelverkabelungen vermieden werden.

Zur weiteren Optimierung können dann die einzelnen Verbindungen noch derart einzelnen Geräten zugeordnet werden, so dass für das eine oder andere Gerät des Schaltschrankes kein separates Kabelbündel erstellt werden braucht. Dies führt zu einer Reduzierung der Anzahl der Kabelbündel und somit zu einer weiteren Vereinfachung der Verkabelung.

Die Entflechtung der komplexen individuellen Anlage erlaubt auch Verdrahtungsbündel nach Anlage- und/oder Ortskennzeichen und/oder Gerätebezeichnungen im vorhinein zu bestimmen.

Weitere Vorteile des erfindungsgemäßen Kabelbündels und seines Herstellungsverfahrens ergeben sich aus der beigefügten Zeichnung und den nachfolgend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine schematische Darstellung eines zu verdrahtenden Schaltschrankes;
- Fig. 2: ein als Rundbündel ausgeführtes Kabelbündel;
- Fig. 3: ein als Sequenzbündel ausgeführtes Kabelbündel;
- Fig. 4: Verwendungshinweis auf einem Kabel;

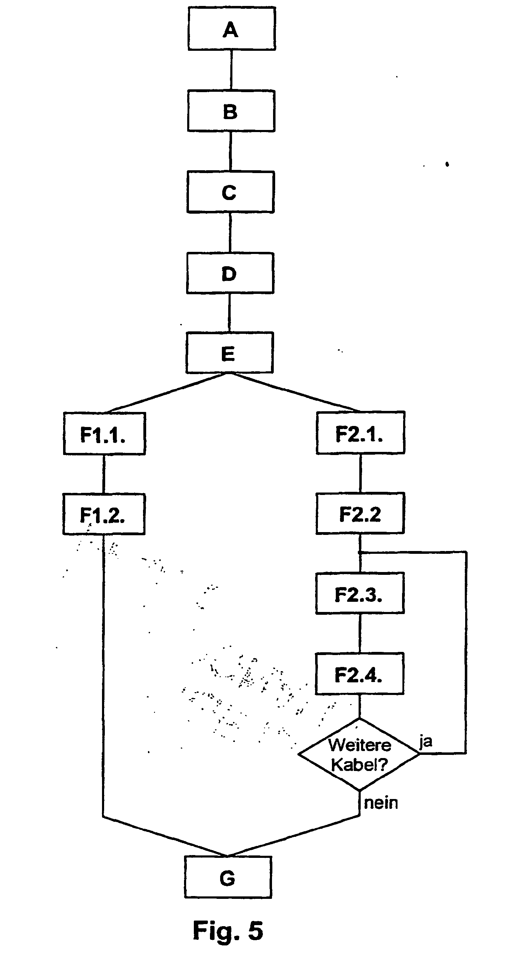

- Fig. 5: Flussdiagramm des Verfahrens zur Erstellung der Kabelbündel.

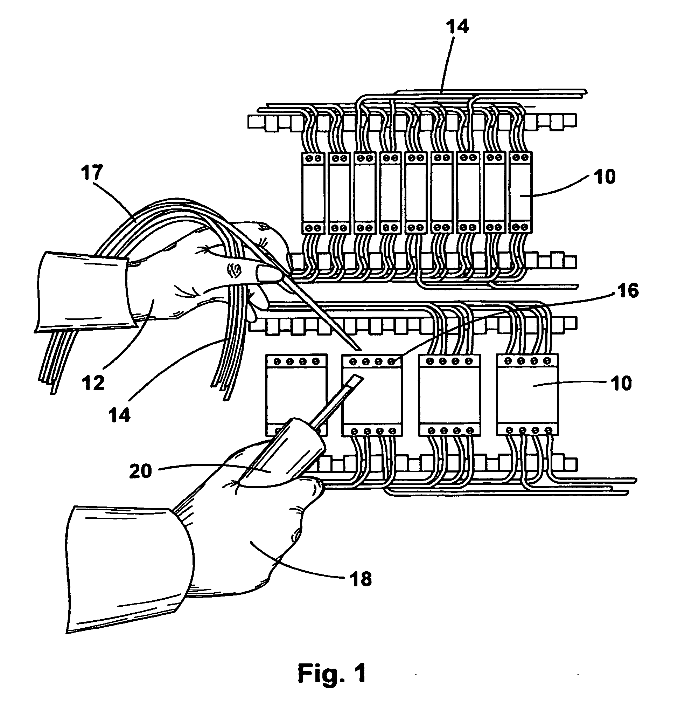

Figur 1 zeigt in schematischer Darstellung einen Ausschnitt aus einem Schaltschrank. In diesem Schaltschrank ist eine Vielzahl von Geräten 10, wie beispielsweise Schalter, Schütze, Relais, Steuerungselemente usw. vorgesehen, die bereits teilweise verdrahtet sind. Des Weiteren sind schematisch die Hände 12, 18 eines Monteurs gezeigt, der gerade weitere Kabel 14 in entsprechende Anschlussklemmen 16 einsetzt. Wie Figur 1 zu entnehmen ist, hält der Monteur ein erfindungsgemäßes Kabelbündel 17 zwischen Daumen und Zeigefinger und kann so die einzelnen Kabel 14 in einfacher Weise ergreifen und in die entsprechende Anschlussklemme 16 einführen, bevor er dann die Anschlussklemme 16 mit dem in der anderen Hand 18 befindlichen Schraubendreher 20 festzieht.

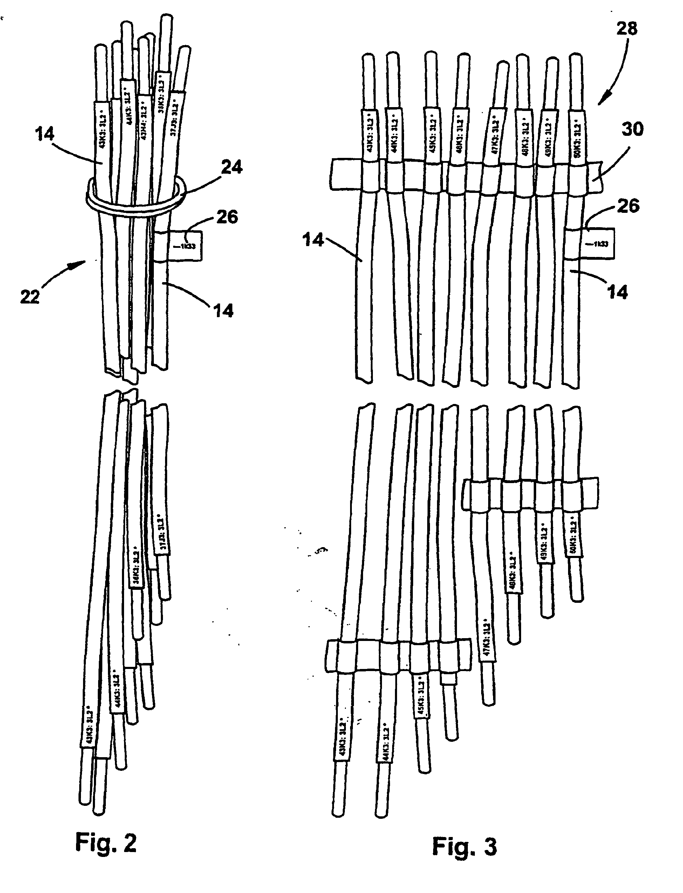

Figur 2 zeigt ein erfindungsgemäßes Rundbündel 22, bei dem eine Vielzahl von Kabeln 14 mit einem Gesamtdurchmesser von etwa 3 cm bis 5 cm zu einem Rundbündel 22 zusammengefasst sind, wobei das Rundbündel 22 durch ein flexibles Kunststoffband 24 zusammengehalten wird. Dieses Rundbündel 22 ist mit einem Etikett 26 versehen, welches die Betriebsmittelkennnummer des betreffenden Gerätes anzeigt, an dem die Kabel 14 anzuschließen sind. Auf dem Etikett 26 können weiterhin Produkt-Informationen und/oder Informationen gemäß DIN beispielsweise Anlage- und Ortskennzeichen, vorgesehen sein.

Figur 3 zeigt ein als Sequenzbündel 28 ausgebildetes Kabelbündel, bei dem die einzelnen Kabel 14 bereits in der anzuklemmenden Reihenfolge sortiert sind und von einem Streifenband 30 in der gewünschten Position gehalten werden.

Sowohl im Rundbündel 22 als auch im Sequenzbündel 28 werden die unterschiedlich langen, unterschiedlich dicken und unterschiedlich farbigen, und teilweise auch von ihrer Art her unterschiedlichen Kabel 14 entsprechend der späteren Verdrahtung gebündelt und in einer handlichen Weise zusammengehalten. Hierdurch ist es dem Monteur in einfacher Weise möglich, ein solches Kabelbündel zu ergreifen, beispielsweise auf der Handfläche oder dem Handrücken zwischen Daumen und Zeigefinger zu halten, und lediglich ein einzelnes Kabel dieses Kabelbündels herauszunehmen, um dieses an die entsprechende Klemme anzuschließen. Hierdurch entfällt ein mühsames Suchen der für das jeweilige Kabel zuständigen Anschlußklemme.

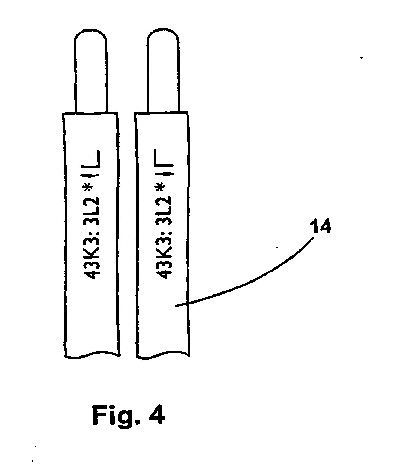

Eine weitere Arbeitserleichterung bewirken die auf den freien Enden der Kabel 14 aufgedruckten Verwendungshinweise, die neben der Bezeichnung der anzuschließenden Anschlußklemme noch zusätzliche Montagehinweise aufweisen. Wie Figur 4 zu entnehmen ist, kann auf dem Kabelende zusätzlich zum Klemmennamen noch ein Pfeil, ein Winkel oder ein Stern aufgedruckt sein. Dabei geben der Pfeil oder der Winkel diejenige Richtung an, in der das Kabel zu verlegen ist.

Hierdurch kann der Monteur, ohne eine genaue Kenntnis von der Lage der Gegenklemme zu haben, das Kabel bereits in diese Richtung verlegen, so dass ein mühsames Suchen der Gegenklemme zunächst entfällt. Gleichzeitig wird hierdurch ein sauberes und geordnetes Verlegen des Kabels erreicht. Desweiteren kann am freien Kabelende beispielsweise ein Sternchen abgedruckt sein, welches dem Monteur den Hinweis gibt, dass an diese Klemme noch ein weiteres Kabel anzuklemmen ist. In diesem Falle braucht der Monteur die entsprechende Klemme nicht abschließend festzuziehen, was ebenfalls eine Arbeitserleichterung darstellt.

Das Verfahren zur Herstellung eines erfindungsgemäßen Kabelbündels verläuft wie folgt:
A. Der Stromlaufplan der zu verdrahtenden Anlage und/oder das Schaltschrank-Layout der entsprechenden Schaltschränke werden in eine EDV-Anlage eingegeben.
   B.1. Ermitteln der zwischen den einzelnen Geräten und Anschlüssen zu erstellenden Verbindungen gemäß dem Stromlaufplan und/oder dem Schaltschrank-Layout der zu verdrahtenden Anlage durch eine EDV-Anlage;
   B.2. Zuordnen jeder Verbindung zu einem bestimmten Gerät;
   B.3. Auswahl eines speziellen Gerätes.
C. wobei die Konfektionsdaten der Kabel, d.h. die Art des Kabels, die Länge des Kabels, der Querschnitt des Kabels und ggf. die Farbe des Kabels, durch die EDV-Anlage aus dem Stromlaufplan und/oder dem Schaltschrank-Layout ermittelt werden,
D. bevor diese Daten an eine Konfektionsvorrichtung übergeben werden.
E. Die Konfektionsvorrichtung konfektioniert dann die entsprechenden Kabel und versieht sie mit den Verwendungshinweisen.
F. Anschließend werden die Kabel gebündelt, und vorzugsweise
G. etikettiert.

Dabei werden die Schritte B.1. und B.2. auch als Entflechten der komplexen, individuellen Anlage bezeichnet, weil hierdurch jede Verbindung zwischen zwei Anschlüssen (Geräten) per Definition genau einem Gerät zugeordnet wird, so dass für jede Verbindung auch nur ein einziges Kabel konfektioniert wird.

Im Rahmen einer weiteren Optimierung des Herstellungsverfahrens werden die Verbindungen derart auf die Geräte verteilt, dass nur für möglichst wenig Geräte ein Kabelbündel erstellt werden braucht.

Je nach Kundenwunsch können die Kabel zu einem Rundbündel oder zu einem Sequenzbündel zusammengefasst werden, wobei auch eine beliebige Kombination zwischen Rund- und Sequenzbündel möglich ist. Das Rundbündel wird mit einem flexiblen Band zusammengefasst und weist einen Durchmesser von vorzugsweise 3 cm bis 5 cm auf.

Bei einem Sequenzbündel sind die einzelnen Kabel u.a. dann nochmal dahingehend sortiert und in der entsprechenden Reihenfolge auf ein Streifenband aufgebracht, dass benachbarte Kabel auch an benachbarte Anschlußklemmen anzuschließen sind.

In einer anderen, hier nicht dargestellten Ausführungsform werden mehrere derartige Kabelbündel nochmal zu einem großen Gruppenbündel zusammengefasst, wobei im Gruppenbündel Kabelbündel benachbarter Geräte zusammengefasst sind.

Dieses Bestimmen (Setzen) von Verdrahtungsbündeln dient dem Monteur dazu, z. B. für Türverdrahtungen seperate Bündel zu erhalten. Diese Bündel werden dann nur noch zusammengefasst und auf einmal in die bei Türverdrahtungen üblichen flexiblen Schläuche geschoben. Durch die Bündeltechnologie können somit bisherige Verdrahtungs-Montageverfahrensweisen wesentlich vereinfacht werden.

Durch das Setzen von Verdrahtungsbündeln nach Gerätebezeichnungen (Betriebsmittelkennzeichen - kurz BMK) werden auch weiterhin Vereinfachungen erzielt, indem z. B. Verbindungsstecker, die sich in Seitenwänden der Schaltanlage befinden, wesentlich einfacher von der Steckverbindung in den Schaltschrank hinein zu verdrahten sind. Das mühsame Verdrahten einzelner Drähte aus einer losen Kabelkonfektion (DE 44 13 577 und DE 187 16 864 A1) entfällt bei der beschriebenen Bündeltechnologie völlig.

### Bezugszeichenliste:

- 10: Gerät
- 12: Hand
- 14: Kabel
- 16: Anschlußklemme
- 17: Kabelbündel
- 18: Hand
- 20: Schraubendreher
- 22: Rundbündel
- 24: Kunststoffband
- 26: Etikett
- 28: Sequenzbündel
- 30: Streifenband

## Patentansprüche

1. Einzelne Kabel zur manuellen Verdrahtung von elektrischen Geräten (10) einer komplexen, individuellen Anlage, wobei jedes einzelne Kabel (14) gemäß der für die Verdrahtung erforderlichen Art, Länge, Querschnitt und/oder Farbe konfektioniert ist, insbesondere wobei jedes einzelne Kabel (14) mit einem Verwendungshinweis versehen ist und wobei die unterschiedlichen, zur Verdrahtung eines speziellen Gerätes (10) oder eines speziellen Teilbereiches der komplexen, individuellen Anlage erforderlichen Kabel (14) herstellerseitig zu einem leicht lösbaren Kabelbündel (17, 22, 28) zusammengefasst sind,
**dadurch gekennzeichnet,**
**dass** der Verwendungshinweis die weiterführende Verdrahtungs - richtung anzeigt und gegebenenfalls den Anschluss eines zweiten Kabels (14) an dieselbe Klemme (16) anzeigt.

2. Kabel nach Anspruch 1,
**dadurch gekennzeichnet,**
**dass** die Verdrahtungsrichtung mit einem Pfeil und/oder einem Winkel angezeigt wird, während der Anschluss eines zweiten Kabels an dieselbe Klemme durch einen Stern angezeigt wird.

3. Kabel nach einem der vorangehenden Ansprüche,
**dadurch gekennzeichnet,**
**dass** am Kabelbündel ein Bestimmungshinweis, insbesondere ein Etikett (26), mit Informationen über das zu verdrahtende Gerät (10) angebracht ist.

4. Kabel nach einem der vorangehenden Ansprüche,
**dadurch gekennzeichnet,**
**dass** das Kabelbündel als Rundbündel (22) ausgeführt ist, wobei die einzelnen Kabel (14) durch ein flexibles Band (24) zusammengehalten sind, wobei das Rundbündel (22) einen Durchmesser zwischen 1 cm und 15 cm, vorzugsweise zwischen 3 cm und 5 cm aufweist.

5. Kabel nach einem der Ansprüche 1 bis 3,
**dadurch gekennzeichnet,**
**dass** das Kabelbündel als kombiniertes Rund- und Sequenzbündel ausgeführt ist, wobei einige Kabel auf einem Streifenband gehalten sind und wobei dieses Streifenband mit anderen Kabeln und/oder Streifenbändern zu einem Rundbündel zusammengefasst sind und durch ein flexibles Band zusammengehalten sind.

6. Verfahren zur Erstellung eines Kabelbündels zur manuellen Verdrahtung von elektrischen Geräten (10) einer komplexen, individuellen Anlage gemäß wenigstens einem der vorangehenden Ansprüche
**gekennzeichnet durch** die folgenden Schritte:
A. Erfassen eines Stromlaufplanes und/oder eines Schaltschrank-Layouts der zu verdrahtenden Anlage **durch** eine EDV-Anlage;
B. Auswahl eines speziellen, zu verdrahtenden Gerätes;
C. Ermitteln der Konfektionsdaten der Kabel dieses Gerätes **durch** die EDV-Anlage;
D. Übergabe dieser Daten an eine Konfektionsvorrichtung;
E. Konfektionieren und Kennzeichnen der Kabel **durch** die Konfektionsvorrichtung;
F. Bündeln der Kabel mit den folgenden Schritten:
F.1.1.Auswahl eines ersten zu verdrahtenden Kabels;
F.1.2.Aufbringen dieses Kabels auf ein Streifenband;
F.1.3.Auswahl eines weiteren zu verdrahtenden Kabels, welches in der Nähe des vorangehenden Kabels zu verdrahten ist;
F.1.4Aufbringen dieses Kabels auf das Streifenband neben dem vorhergehenden Kabel;
F.1.5.Wiederholen der Schritte F.1.3. bis F.1.4. so lange, bis alle Kabel auf dem Streifenband aufgebracht sind

7. Verfahren nach Anspruch 6, weiterhin
**gekennzeichnet durch** Schritt
G. Etikettieren des Kabelbündels.

8. Verfahren nach einem der Ansprüche 6 oder 7,
**dadurch gekennzeichnet,**
**dass** in Schritt B. die Auswahl eines speziellen, zu verdrahtenden Gerätes die folgende Schritte umfasst:
B.1. Ermitteln der zwischen den einzelnen Geräten und Anschlüssen zu erstellenden Verbindungen gemäß dem Stromlaufplan und/oder dem Schaltschrank-Layout der zu verdrahtenden Anlage durch eine EDV-Anlage;
B.2. Zuordnen jeder Verbindung zu einem bestimmten Gerät;
B.3. Auswahl eines speziellen Gerätes.

9. Verfahren nach einem der Ansprüche 6 bis 8,
**dadurch gekennzeichnet,**
**dass** in Schritt F. das Bündeln der Kabel folgende Schritte umfasst:
F.1.6. zusammenfassen der Kabel zu einem Rundbündel;
F.1.7. umschließen des Rundbündels mit einem flexiblen Band.

10. Verfahren nach wenigstens einem der Ansprüche 6 bis 9, **gekennzeichnet durch** die folgenden Schritte:
H. Auswahl der zu verdrahtenden Geräte einer Gerätegruppe;
I. Bündeln der Kabelbündel dieser Geräte zu einem Gruppenbündel.

## Claims

1. Discrete cables for the manual wiring of electrical apparatus (10) in a complex individual installation, every single cable (14) being tailored in accordance with the type, length, cross-section and/or colour required for wiring, every single cable (14) being more specifically provided with a how-to-use indication and the various cables (14) needed for wiring a special apparatus (10) or a special partial area of the complex individual installation being combined by the manufacturer into a readily disengageable bundle of cables (17, 22, 28),
**characterized in**
**that** said how-to-use indication shows the subsequent wiring direction and where applicable the connection of a second cable (14) to the same terminal (16).

2. The cable as set forth in claim 1,
**characterized in**
**that** the wiring direction is indicated by an arrow and/or an elbow symbol, whereas the connection of a second cable to the same terminal is indicated by an asterisk.

3. The cable as set forth in any one of the afore mentioned claims,
**characterized in**
**that** a where-to-use indication, more specifically a label (26) carrying information about the apparatus (10) to be wired, is attached to the cable bundle.

4. The cable as set forth in any one of the afore mentioned claims,
**characterized in**
**that** the cable bundle is configured to be a round bundle (22), with the discrete cables (14) being held together by a flexible tape (24), said round bundle (22) having a diameter ranging between 1 cm and 15 cm, preferably between 3 cm and 5 cm.

5. The cable as set forth in any one of the claims 1 through 3,
**characterized in**
**that** the cable bundle is configured to be a combined round and sequence bundle, some cables being retained on a strip, and said strip being combined together with other cables and/or strips into a round bundle and held together by a flexible tape.

6. A method of producing a cable bundle for the manual wiring of electrical apparatus (10) of a complex, individual installation as set forth in any one of the afore mentioned claims
**characterized by** the following steps:
A. Entering a wiring diagram and/or a switch cabinet layout of the installation to be wired into electronic data processing equipment;
B. Selecting a special apparatus to be wired;
C. Determining the data for tailoring the cables of said apparatus by said electronic data processing equipment;
D. Transferring said data to a tailoring device;
E. Tailoring and identifying the cables through said tailoring device;
F. Bundeling the cables, which involves the following steps:
F.1.1. Selecting a first cable to be wired;
F.1.2. Applying said cable onto a strip;
F.1.3. Selecting another cable that is to be wired in proximity to the previous cable;
F.1.4. Applying said cable onto said strip next to the previous cable;
F.1.5. Repeating the steps F.1.3. through 1F.1.4. until all the cables are mounted to said strip.

7. The method as set forth in claim 6, further
**characterized by** step
G. labelling the cable bundle.

8. The method as set forth in any one of the claims 6 or 7,
**characterized in**
**that** in step B. selecting a special apparatus to be wired comprises the following steps:
B.1. Determining the connections to be established between the discrete apparatus and connecting terminals in accordance with the wiring diagram and/or the switch cabinet layout of the installation to be wired by electronic data processing equipment;
B.2. Associating each connection with a certain apparatus;
B.3. Selecting a special apparatus.

9. The method as set forth in any one of the claims 6 through 8,
**characterized in**
**that** in step F. the bundeling of the cables comprises the following steps:
F.1.6. combining the cables into a round bundle;
F.1.7. surrounding said round bundle with a flexible tape.

10. The method as set forth in any one of the claims 6 through 9,
**characterized by** the following steps :
H. Selecting the apparatus of a group of apparatus that are to be wired;
I. Bundeling the cable bundles of said apparatus into a bundle group.

## Revendications

1. Câbles individuels pour le câblage manuel d'appareils électriques (10) d'une installation individuelle complexe, chaque câble (14) étant confectionné en fonction du type, de la longueur, de la section transversale et/ou de la couleur nécessaire au câblage, chaque câble (14) étant notamment muni d'une indication concernant son utilisation et les différents câbles (14) nécessaires au câblage d'un appareil particulier (10) ou d'une partie particulière de l'installation individuelle complexe étant réunis en atelier en un faisceau de câbles (17, 22, 28) aisément détachables les uns des autres,
**caractérisé en ce**
**que** l'indication concernant l'utilisation des câbles indique la direction de câblage à suivre et le cas échéant le branchement d'un deuxième câble (14) à la même borne (16).

2. Câble selon la revendication 1,
**caractérisé en ce**
**que** la direction du câblage est indiquée par une flèche et/ou un coin tandis que le branchement d'un deuxième câble à la même borne est indiqué par un astérisque.

3. Câble selon l'une quelconque des revendications précédentes,
**caractérisé en ce**
**qu'**une indication concernant l'usage qu'il y a lieu d'en faire, notamment une étiquette (26), portant des informations sur l'appareil (10) à câbler est attachée au faisceau de câble.

4. Câble selon l'une quelconque des revendications précédentes,
**caractérisé en ce**
**que** le faisceau de câbles est réalisé sous forme de faisceau rond (22), les différents câbles (14) étant maintenus ensemble par un ruban flexible (24), le faisceau rond (22) ayant un diamètre compris entre 1 cm et 15 cm, de préférence entre 3 cm et 5 cm.

5. Câble selon l'une quelconque des revendications 1 à 3,
**caractérisé en ce**
**que** le faisceau de câbles est réalisé sous forme de faisceau rond et séquentiel à la fois, certains câbles étant retenus sur une bande et cette bande étant rassemblée avec d'autres câbles et/ou bandes en un faisceau rond retenu par un ruban flexible.

6. Procédé destiné à l'élaboration d'un faisceau de câbles pour le câblage manuel d'appareils électriques (10) d'une installation individuelle complexe selon au moins une des revendications précédentes,
**caractérisé par** les étapes suivantes:
A. on entre dans une installation de traitement de données un schéma de circuit et/ou un plan d'une armoire de distribution de l'installation qu'il y a lieu de câbler ;
B. on choisit un appareil particulier qu'il y a lieu de câbler ;
C. on détermine les données de confection du câble de cet appareil par l'intermédiaire de l'installation de traitement de données ;
D. on transmet ces données à un dispositif de confection ;
E. on confectionne et marque les câbles avec le dispositif de confection;
F. on réunit les câbles en faisceau en réalisant les étapes suivantes :
F.1.1. on choisit un premier câble à câbler;
F.1.2. on applique ce câble sur une bande ;
F.1.3. on choisit un autre câble qu'il y a lieu de câbler à proximité du câble précédent ;
F.1.4. on applique ce câble sur la bande à côté du câble précédent;
F.1.5. on répète les étapes F.1.3. à F.1.4. jusqu'à ce que tous les câbles soient appliqués sur la bande.

7. Procédé selon la revendication 6,
**caractérisé en outre par** l'étape
G. on étiquette le faisceau de câbles.

8. Procédé selon l'une quelconque des revendications 6 ou 7,
**caractérisé en ce**
**que**, à l'étape B., le fait de choisir un appareil particulier qu'il y a lieu de câbler comprend les étapes suivantes :
B.1. on détermine les liaisons à établir entre les différents appareils et connexions en fonction du schéma de circuit et/ou du plan de l'armoire de distribution de l'installation qu'il y a lieu de câbler moyennant une installation de traitement de données ;
B.2. on associe chaque liaison à un certain appareil ;
B.3. on choisit un appareil particulier.

9. Procédé selon l'une quelconque des revendications 6 à 8,
**caractérisé en ce**
**que**, à l'étape F., le fait de rassembler les câbles en faisceau comprend les étapes suivantes :
F.1.6. on rassemble les câbles en un faisceau rond ;
F.1.7. on lie le faisceau rond avec un ruban flexible.

10. Procédé selon l'une quelconque des revendications 6 à 9,
**caractérisé par** les étapes suivantes:
H. on choisit les appareils d'un groupe d'appareils qu'il y a lieu de câbler;
I. on rassemble les faisceaux de câbles de ces appareils en un groupe de faisceaux.
